# EUROPEAN PATENT APPLICATION

(11) **EP 2 159 200 A2**
(43) Date of publication of application: **03.03.2010**
(21) Application number: 09168841.6
(22) Date of filing: 27.08.2009
(51) Int. Cl.: C03B 33/033

(54) **Brittle material breaking device**

(30) Priority: 29.08.2008 JP 2008221156
(71) Applicant: Mitsuboshi Diamond Industrial Co., Ltd., Suita-city, Osaka 564-0044 (JP)
(72) Inventor: Yoshimura, Hiroaki, Suita-city Osaka 564-0044 (JP); Funada, Hideaki, Suita-city Osaka 564-0044 (JP); Matsumura, Katsutoshi, Suita-city Osaka 564-0044 (JP)
(74) Representative: TBK-Patent

(57) **Abstract**

The brittle material breaking device includes: a support table for supporting a brittle material; and a breaking bar 59 for pressing down the brittle material on which a scribe line is formed and which is moved by a transfer means. And, the brittle material breaking device breaks the brittle material along the scribe line by using the breaking bar 59. The brittle material breaking device comprises: one or more support axes 53 for moving the breaking bar 59 upward and downward; and a linear servo motor 57 for moving one or more the one or more support axes 53. The brittle material breaking device further comprises a control mechanism for regulating the breaking bar 59 moving downward lower than a predetermined position. The control mechanism includes: a collision part 60 arranged at a lower portion of the support axis 53; and a pedestal part of a stopper 61 for catching the collision part 60. The pedestal part of the stopper 61 is able to rotate around the same central axis as a central axis of a rotational axis of the stepping motor 51.

## Description

### Background of the Invention

### 1. Field of the Invention

The present invention relates to a brittle material breaking device able to break a brittle material such as a glass substrate having a scribe line with high quality without depending of the thickness of the substrate.

### 2. Description of the Related Art

When a predetermined load is applied to one surface of a plate-shaped brittle material such as a glass substrate after a scribe line is formed on the other surface of the brittle material, the brittle material can be broken along the scribe line.

A breaking device using an air cylinder (cylinder breaking device) is often used as a breaking device. The cylinder breaking device is able to let a breaking bar fall at a fast speed to surely break even a thick brittle material. However, since controlling a falling speed of the break bar with an air pressure, the cylinder breaking device is not able to precisely control the falling speed and is hard to adjust an amount of pushing the breaking bar.

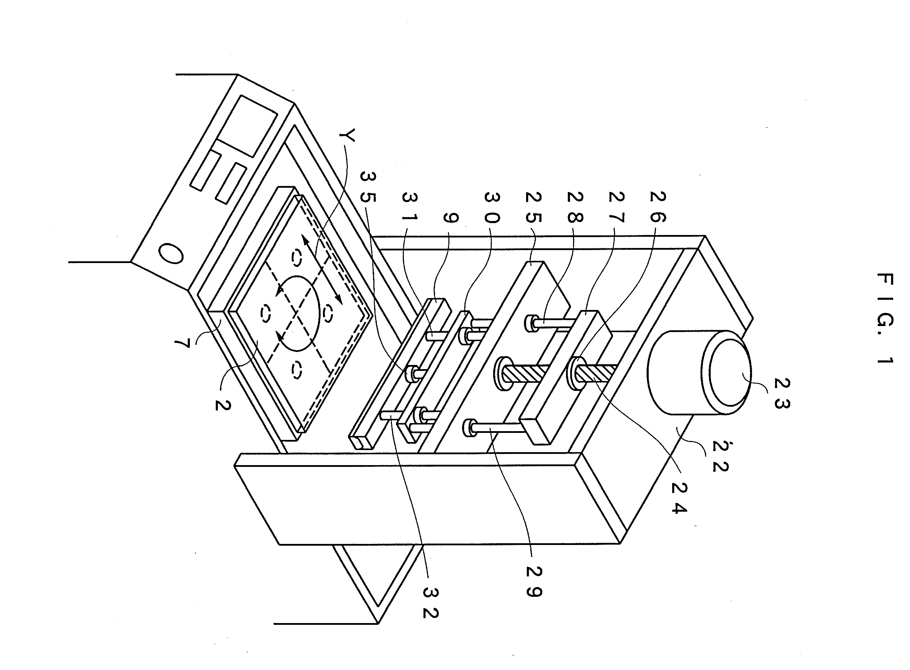

Thus, a breaking device able to precisely control a pressure to the brittle material by using a servo motor (servo breaking device) is developed. The servo breaking device is able to break even a thin brittle material with high quality. Fig.1 is a perspective view showing a schematic configuration of the conventional servo breaking device. Fig.1 is a perspective view showing a schematic configuration of the conventional servo breaking device.

As shown in Fig. 1, the conventional servo breaking device has a servo motor 23 on a horizontal fixture member 22, directly connects a ball screw 24 to a rotational axis of the servo motor 23, and rotatably supports a lower end of the ball screw 24 on a horizontal fixture member 25.
The upper moving member 27 has a female screw 26 screwed with the ball screw 24 and has a support axes 28 and 29 on the lower side of the both end portions. The support axes 28 and 29 pierce through the horizontal fixture member 25 and are fixed to a lower moving member 30. In this construction, when the servo motor 23 rotates, the lower moving member 30 and the upper moving member 27 move upward and downward as one.

Meanwhile, the breaking bar 9 has two axes 31 and 32 on the upper side, the axes 31 and 32 are slidably inserted into through-holes of the lower moving member 30, and thus the breaking bar 9 can move upward and downward with respect to the lower moving member 30. Additionally, the lower moving member 30 and the breaking bar 9 are in communication with each other via a load sensor 35 in a connection mechanism.

A table 7 can move and rotate in the Y direction as shown by arrowed lines in the drawings. A brittle material 2 to be broken is placed on the table 7. When a scribe line formed on the brittle material 2 is positioned on fall line of the breaking bar 9 and the breaking bar 9 is let fall, the brittle material 2 can be broken.

However, a servo breaking device disclosed in Japanese Unexamined Patent Publication No. H10-330125 can break a thin substrate with high quality but cannot break a thick substrate requiring a breaking bar to be let fall at a predetermined speed or more. Accordingly, a cylinder breaking device had to be used for breaking a thick substrate. This has to use in parallel a plurality of the breaking devices depending on the thickness of the substrate to be broken, and is hard to reduce a production cost.

In addition, the servo breaking device lets the break bar fall at a low speed to gradually apply a pressure to the thin substrate, and thereby breaks the thin substrate without corruption. Accordingly, the servo breaking device does not need to have a mechanical stopper for stopping the falling of the breaking bar as shown in Japanese Unexamined Patent Publication No. H10-330125. However, in order to break the thick substrate along a scribe line, the servo breaking device has to let the breaking bar 9 fall at a predetermined speed or more. As described above, the conventional servo breaking device does not have the mechanical stopper, and inevitably the breaking bar 9 exceedingly pushes the thick substrate in a case where the breaking bar 9 falls at the predetermined speed or more.

The present invention is achieved in view of such circumstances, and intends to provide a brittle material breaking device able to break a brittle material with high quality regardless of whether the brittle material to be broken is the thick substrate or the thin substrate.

To achieve the above-mentioned purpose, a brittle material breaking device includes: a support table for supporting a brittle material; and a breaking bar for pressing down the brittle material on which a scribe line is formed and which is moved by a transfer means, the brittle material breaking device for breaking said brittle material along said scribe line by using the breaking bar, and comprises: one or more support axes for moving said breaking bar upward and downward; a motor for moving one or more the support axes; and a control mechanism for regulating said breaking bar moving downward lower than a predetermined position.

In the first invention, the brittle material breaking device includes: a support table for supporting a brittle material; and a breaking bar for pressing down the brittle material on which a scribe line is formed and which is moved by a transfer means, the brittle material breaking device for breaking the brittle material along the scribe line by using the breaking bar. The brittle material breaking device comprises: one or more support axes for moving said breaking bar upward and downward; and a motor for moving one or more the support axes, and by further comprising a control mechanism for regulating said breaking bar moving downward lower than a predetermined position, the breaking bar can be prevented from falling downward lower than the predetermined position not only in the case where the breaking bar falls at a low speed but also in the case where the breaking bar falls at a high speed, and the brittle material can be broken safely and certainly even in the case where the brittle material is a thick substrate.

In addition, the brittle material breaking device according to a second invention is characterized in that said control mechanism includes: a collision part arranged at a lower portion of said support axis; and a stopper for catching the collision part in the first invention.

In the second invention, the control mechanism is able to act as a mechanical stopper by including: a collision part arranged at a lower portion of said support axis; and a pedestal part for catching the collision part in the first invention, and a range of the falling of the breaking bar can be regulated within a safe range even when a falling speed is increased to break the thick substrate.

The brittle material breaking device according to a third invention is characterized in that the stopper includes: a pedestal part having a rotational axis; and a thrust bearing for rotatably supporting the rotational axis of said pedestal part.

In addition, the brittle material breaking device according to a fourth invention is characterized in that said pedestal part is able to rotate around the same central axis as a central axis of a rotational axis of said collision part in the second invention.

In the fourth invention, since the pedestal part is configured so as to rotate around the same central axis as a central axis of a rotational axis of the collision part, the phase shear force generated by rotation can be minimized, thereby extending the life of the pedestal part.

As described-above, since the brittle material breaking device comprises a control mechanism for regulating the breaking bar moving downward lower than a predetermined position, the breaking bar can be prevented from falling downward lower than the predetermined position not only in the case where the breaking bar falls at a low speed but also in the case where the breaking bar falls at a high speed, and the brittle material can be broken safely and certainly even in the case where the brittle material is a thick substrate.

### Brief Description of the Drawings

Fig. 1 is a perspective view showing a schematic configuration of a conventional servo breaking device;
Fig. 2 shows a front view and a partial side view of a configuration of a brittle material breaking device according to an embodiment of the present invention;
Fig. 3 is a partially-enlarged view showing a configuration of the control mechanism of the brittle material breaking device according to the embodiment of the present invention; and
Fig. 4 is a cross-section view on a surface including a rotational axis of one stepping motor, the view showing a configuration of a stopper of the brittle material breaking device according to the embodiment.

### Description of the Preferred Embodiments

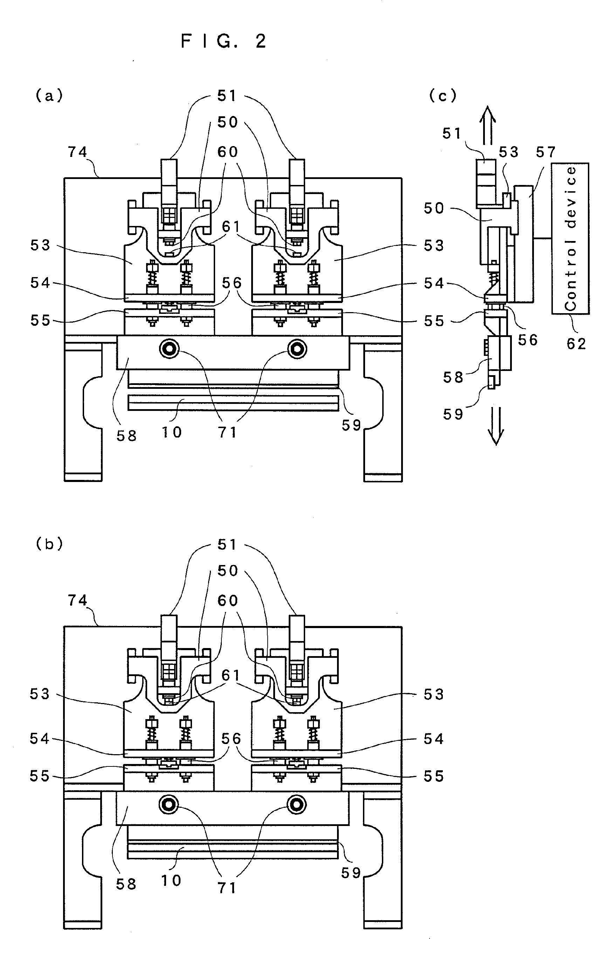

Referring to drawings, an embodiment of the present invention will be explained below. Fig. 2 shows a front view and a partial side view of a configuration of a brittle material breaking device according to the embodiment of the present invention. Fig. 2(a) is the front view showing the configuration of the brittle material breaking device according to the embodiment before a breaking bar is let fall. Fig. 2(b) is the front view showing the configuration of the brittle material breaking device according to the embodiment after the breaking bar was let fall. Fig. 2(c) is the partial side view showing the configuration of the brittle material breaking device according to the embodiment.

As shown in Fig. 2(a), a brittle material breaking device 1 according to the embodiment of the present invention includes two stepping motors 51 assembled to support members (support axes) 53, the support members being able to move upward and downward with respect to machine frames 50 respectively. Collision parts 60 are provided to lower ends of rotational axes of the stepping motors 51, and distances between the stepping motors 51 and the collision parts 60 can be changed by rotating the stepping motors 51. In this manner, falling distances of the breaking bar can be adjusted.

As shown in Fig. 2(c), linear servo motors 57 are assembled on back surfaces of the support members 53 respectively. The linear servo motors 57 are fixed to a chassis 74 to which the machine frames 50 are fixed. The support members 53 move upward and downward with respect to the machine frames 50 by the linear servo motors 57, respectively.

Returning to Fig. 2(a), upper moving members 54 are provided to lower portions of the support members 53. Each of the upper moving members 54 has two through-holes. As shown in Fig. 2(a), each of guide axes 56 has a stopper ring 75 at the upper end. In addition, each of the guide axes 56 retains a spring between the stopper ring 75 and the upper moving member 54 and passes through the through-holes of the upper moving members 54. Additionally, lower ends of the guide axes 56 passing through the through-holes of the upper moving members 54 are fixed to lower moving members 55 respectively. Moreover, a breaking bar support member 58 is connected to the lower moving members 55. The members under the lower moving members 55 are accordingly in the same configuration where the members are suspended from the guide axes 56 that are supported by the upper moving members 54 via the spring.

In addition, the lower moving members 55 support the breaking bar support member 58 to which the breaking bar 59 is fixed, and the breaking bar 59 moves upward and downward in synchronization with the support members 53 by the linear servo motors 57.

Meanwhile, the breaking bar support member 58 is rotatably connected to the lower moving members 55 at two connecting portions 71. In addition, the support members 53 can be let fall at speeds different from each other when the linear servo motors 57 are driven at speed different from each other, and thereby the breaking bar support member 58 can be inclined to a desired direction and the breaking bar 59 also can be inclined.

In the same manner as that of the conventional breaking device, in order to break a brittle material, the brittle material to be broken is placed on a table (not shown in the drawing) able to move in the Y direction and rotate and a scribe line formed on the brittle material is positioned on fall line of the breaking bar 59. And then, the breaking bar 59 is let fall by driving the linear servo motors 57. In the embodiment, a control mechanism composed of a collision part 60 and a stopper 61 is included so that the breaking bar 59 cannot exceedingly fall.

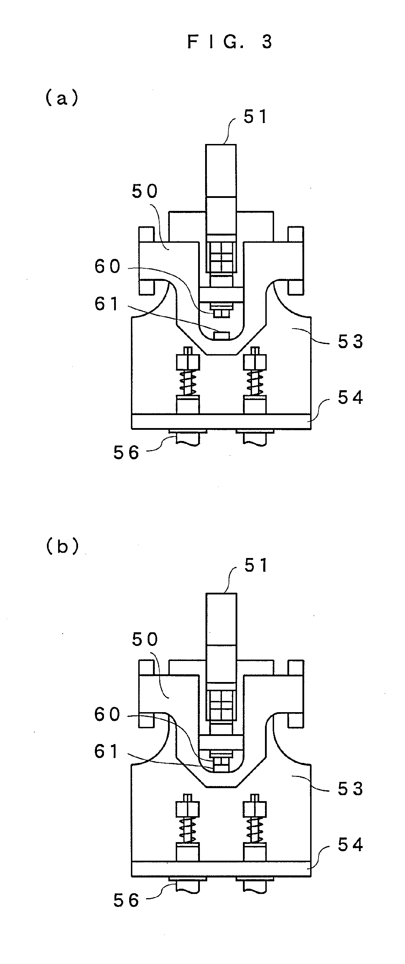

Fig. 3 is a partially-enlarged view showing a configuration of one of the control mechanisms of the brittle material breaking device 1 according to the embodiment of the present invention. Fig. 3(a) shows a state of the control mechanism before the collision part 60 contacts to the stopper 61, and Fig. 3(b) shows a state of the control mechanism after the collision part 60 contacted to the stopper 61.

The linear servo motor 57 is connected to the support member 53 and the collision part 60 is provided to the lower end of the rotational axis of the stepping motor 51. The stopper 61 is arranged at a position where a locus of movement of the collision part 60 intersects with the machine frame 50, and keeps a predetermined clearance from the collision part 60 before the breaking bar support member 58 falls. The predetermined clearance can be adjusted by rotating the stepping motor 51 to change the distance between the collision part 60 and the stopper 61. In the breaking, when the linear servo motor 57 moves at a high speed, the support member 53 and the breaking bar 59 falls together. At this time, when the collision part 60 collides to the stopper 61 as shown in Fig. 3(b), the support member 53 stops falling and thereby the breaking bar 59 also stops falling at the moment.

That is, in the breaking of the brittle material, a falling speed of the breaking bar 59 can be controlled by controlling moving speeds of the two linear servo motors 57. For example, in the case where the brittle material to be broken is a thin substrate, the falling speed of the breaking bar 59 can be slow by keeping the moving speeds of the linear servo motors 57 low. In this manner, the brittle material is broken along the scribe line and an undesirable crack can be avoided. In addition, in the case where the brittle material to be broken is a thick substrate, the falling speed of the breaking bar 59 can be fast by keeping the moving speeds of the linear servo motors 57 high. Accordingly, this device can certainly break even the brittle material having a thickness enough to interfere with the smooth breaking along the scribe line.

In the case where the brittle material to be broken is the thick substrate, the breaking bar 59 is hard to stop due to inertia and may fall exceedingly. Accordingly, when the collision parts 60 to contact to the stoppers 61 are provided to the lower ends of the rotational axes of the stepping motors 51, the breaking bar 59 is controlled by the stoppers 61 so as not to fall any more at the time when the collision parts 60 collide to the stoppers 61. In this manner, this device can safely break the brittle material even when the brittle material to be broken is a thick substrate.

Meanwhile, in a case where the linear servo motors 57 move to let fall the breaking bar 59, the collision parts 60 fall in a state of being rotatable. Same as the conventional cylinder breaking device having a stopper that does not rotate, a stopper that does not rotate may be employed. In the conventional cylinder breaking device, the collision part does not rotate. In the breaking device according to the embodiment, in a case where the collision parts 60 rotate at a moment when the collision parts 60 collide to the stoppers 61, a phase shear force is generated due to the rotation, resulting in increasing possibility of wear and damage of surfaces of the stoppers 61. Hence, the stoppers 61 are configured to be able to rotate and thereby the phase shear force caused by the rotation is reduced.

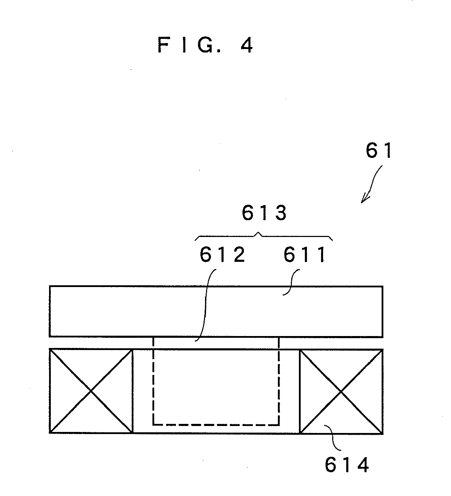

Fig. 4 is a cross-section view on a surface including a rotational-central axis, the view showing a configuration of the stopper 61 of the brittle material breaking device 1 according to the embodiment. As shown in Fig. 4, a pedestal part 613 is composed of a rotational axis 612 and the discoid member 611, and the rotational axis 612 is provided to a central portion of the discoid member 611. And, the rotational axis 612 portion of the pedestal part 613 is fitted into the thrust bearing 614. In a case where the rotating collision part 60 collides to the stopper 61, the pedestal part 613 is rotated due to friction with the collision part 60, thereby making it possible to prevent a phase shear force from being generated on the discoid member 611. The surface of the stopper 61 accordingly is not chipped off due to the friction with the collision part 60 and thus the wear resistance of the stopper is exceedingly improved.

According to the embodiment, since the control mechanism for regulating the breaking bar moving downward lower than a predetermined position as described above, the breaking bar can be prevented from falling downward lower than the predetermined position not only in the case where the breaking bar falls at a low speed but also in the case where the breaking bar falls at a high speed. The brittle material breaking device can break the brittle material safely and certainly even in the case where the brittle material is a thick substrate.

Meanwhile, in the above-mentioned embodiment having the two linear servo motors 57 has been explained, but the numbers of: the linear servo motors 57; and the control mechanisms composed of the collision part 60 and the stopper 61 are not limited to two and may be four or only one.

In addition, the brittle material applied to the present invention is not limited to a glass plate and any kinds of brittle materials that are broken with high quality after forming a scribe line can be applied to. It is obvious that other various types of modifications and replacements can be applied to the present invention within the scope of the present invention, and, for example, the stopper is not limited to the mechanism employing the thrust bearing.

The brittle material breaking device includes: a support table for supporting a brittle material; and a breaking bar 59 for pressing down the brittle material on which a scribe line is formed and which is moved by a transfer means. And, the brittle material breaking device breaks the brittle material along the scribe line by using the breaking bar 59. The brittle material breaking device comprises: one or more support axes 53 for moving the breaking bar 59 upward and downward; and a linear servo motor 57 for moving one or more the one or more support axes 53. The brittle material breaking device further comprises a control mechanism for regulating the breaking bar 59 moving downward lower than a predetermined position. The control mechanism includes: a collision part 60 arranged at a lower portion of the support axis 53; and a pedestal part of a stopper 61 for catching the collision part 60. The pedestal part of the stopper 61 is able to rotate around the same central axis as a central axis of a rotational axis of the stepping motor 51.

## Claims

1. A brittle material breaking device including:
a support table for supporting a brittle material; and
a breaking bar for pressing down the brittle material on which a scribe line is formed and which is moved by a transfer means, the brittle material breaking device for breaking said brittle material along said scribe line by using the breaking bar, **characterized in that**
the brittle material breaking device comprises:
at least one support axis for moving said breaking bar upward and downward;
a motor for moving said support axis; and
a control mechanism for preventing said breaking bar from moving downward lower than a predetermined position.

2. The brittle material breaking device according to claim 1, wherein
said control mechanism includes: a collision part arranged at a lower portion of said support axis; and a stopper for catching the collision part.

3. The brittle material breaking device according to claim 2, wherein
said stopper includes: a pedestal part having a rotational axis; and a thrust bearing for rotatably supporting said rotational axis of said pedestal part.

4. The brittle material breaking device according to claim 2, wherein
said pedestal part is able to rotate around the same central axis as a central axis of a rotational axis of said collision part.
